(19) Europäisches Patentamt
European Patent Office
Office européen des brevets

(11) **EP 3 831 791 B1**

(12) **FASCICULE DE BREVET EUROPEEN**

(45) Date de publication et mention
de la délivrance du brevet:
**01.11.2023 Bulletin 2023/44**

(21) Numéro de dépôt: **20210912.0**

(22) Date de dépôt: **01.12.2020**

(51) Classification Internationale des Brevets (IPC):
**C03C 25/26** (2018.01)    **C03C 25/27** (2018.01)
**C03C 25/285** (2018.01)    **C03C 25/321** (2018.01)
**D04H 1/64** (2012.01)    **D04H 1/587** (2012.01)
**D04H 1/4218** (2012.01)

(52) Classification Coopérative des Brevets (CPC):
**C03C 25/285; C03C 25/26; C03C 25/27;
C03C 25/321; D04H 1/4218; D04H 1/587;
D04H 1/64**

(54) **PROCÉDÉ POUR AMÉLIORER LES PERFORMANCES ACOUSTIQUES D'UN PRODUIT ISOLANT Á BASE DE FIBRES MINÉRALES ET PRODUIT**

VERFAHREN ZUR VERBESSERUNG DER SCHALLDÄMMEIGENSCHAFTEN EINES ISOLIERPRODUKTS AUF MINERALFASERBASIS UND ENTSPRECHENDES PRODUKT

METHOD FOR IMPROVING THE ACOUSTIC PERFORMANCE OF AN INSULATING PRODUCT MADE OF MINERAL FIBRES AND PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2019 FR 1913763**

(43) Date de publication de la demande:
**09.06.2021 Bulletin 2021/23**

(73) Titulaire: **SAINT-GOBAIN ISOVER
92400 Courbevoie (FR)**

(72) Inventeurs:
• **LEGRAND, Aurélie
75019 PARIS (FR)**
• **SALOMON, Pierre
75014 PARIS (FR)**
• **JACQUS, Gary
75018 PARIS (FR)**
• **LEROY, Pierre
60370 SAINT-FELIX (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 1 352 025**     **WO-A1-02/051936
US-A1- 2009 252 962**     **US-A1- 2015 232 645**

EP 3 831 791 B1

**Description**

La présente invention concerne un procédé d'amélioration des performances acoustiques d'un produit isolant à base de fibres minérales tout en maintenant de bonnes propriétés mécaniques. L'invention se rapporte également aux produits isolants obtenus par un tel procédé. Ces produits isolants, qui peuvent être à base de laine de verre ou de roche ou de laitier, ou des mélanges de celles-ci, sont usuellement utilisés pour la réalisation de plafonds ou de planchers, de parement muraux ou de cloisons de séparation d'isolation par l'extérieur et façades et pour la réalisation de pièces moulées dans l'industrie automobile.

La fabrication de produits isolants à base de laine minérale comprend généralement une étape de fabrication des fibres de verre ou de roche par un procédé de centrifugation. Sur leur trajet entre le dispositif de centrifugation et le tapis de collecte des fibres, on pulvérise sur les fibres encore chaudes une composition aqueuse d'encollage, également appelée composition aqueuse de liant, qui subit ensuite une réaction de polymérisation à des températures généralement supérieures à 100°C.

Depuis plusieurs années, l'utilisation de différentes résines thermodurcissables, en tant que liants, contenues dans les compositions d'encollage, a permis d'améliorer les performances mécaniques des produits d'isolation obtenus, sans qu'une attention particulière ait été portée aux performances acoustiques de tels produits.

En effet, les propriétés recherchées pour ces produits isolants à base de laine minérale étaient, en plus des propriétés d'isolation thermique, des propriétés mécaniques telles qu'une stabilité dimensionnelle, une reprise d'épaisseur après compression, une résistance au poinçonnement, à l'arrachement, à la traction, à la compression et à la flexion, y compris après vieillissement et en particulier dans des conditions humides.

Les résines thermodurcissables les plus couramment utilisées pour la fabrication de produits d'isolation à base de laine minérale sont des résines phénoliques de type résols. Outre leur bonne aptitude à réticuler dans les conditions thermiques précitées, ces résines sont solubles dans l'eau, possèdent une bonne affinité pour les fibres minérales grâce notamment à la présence de silane, et sont relativement peu coûteuses.

Les résols les plus usuels sont obtenus par condensation de phénol et de formaldéhyde, en présence d'un catalyseur basique. Au final, ces résols contiennent une certaine proportion de monomères n'ayant pas réagi, en particulier le formaldéhyde dont la présence n'est pas souhaitée à cause de ses effets nocifs avérés.

Pour cette raison, les résines à base de résols sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux performances mécaniques du produit final, ce qui abaisse notablement le coût total de la résine.

Il a néanmoins été observé que, dans les conditions de températures auxquelles la nappe de laine minérale est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

Il a été proposé dans les demandes WO2008/043960 et WO2008/043961 de la Demanderesse de substituer l'urée par une amine, formant ainsi des résines phénoliques aminées, stables thermiquement, présentant un taux de formaldéhyde et de phénol très faibles tout en préservant les performances mécaniques.

Dans le même sens, il a été proposé de lier des fibres minérales avec des compositions aqueuses de liant thermodurcissable exemptes de formaldéhyde contenant en tant que réactifs thermoréticulables des hydrates de carbone et des acides polycarboxyliques dans la demande WO2009/0809038.

La Demanderesse a proposé dans ses demandes WO2010/029266 et WO2013/014399 des liants à base de sucres hydrogénés, également appelés alcools de sucres, ces réactifs présentant également une très bonne stabilité thermique et conférant au produit final de bonnes performances mécaniques.

Des liants exempts de formaldéhyde contenant à la fois des sucres hydrogénés et des sucres réducteurs ou non-réducteurs ont été divulgués respectivement dans les demandes WO2013/021112 et WO2015/159012 au nom de la Demanderesse.

La Demanderesse a proposé en outre dans la demande WO2015/132518 d'améliorer la résistance au vieillissement des produits d'isolation de laine minérale liée par des liants à base de sucres hydrogénés, éventuellement en mélange avec des sucres réducteurs, en incorporant des quantités assez importantes d'époxysilanes dans la composition de liant.

Elle a également utilisé avec succès des monoalcools à la fois hydrophobes et hydrosolubles, tels que le phénoxyéthanol, pour réduire la sensibilité à l'humidité de tels produits d'isolation (voir WO2015/181458).

De nombreuses solutions ont par conséquent été apportées dans le but d'améliorer les performances mécaniques desdits produits isolants à base de laine minérale tout en diminuant la nocivité pour l'homme et l'environnement mais sans chercher à optimiser les performances acoustiques de tels produits, ces produits isolants étant pourtant utilisés en tant que produits d'isolation thermique et/ou acoustique.

Les inventeurs ont par conséquent cherché à améliorer les performances acoustiques de produits isolants à base de fibres minérales, tout en conservant de bonnes propriétés mécaniques.

Pour cela, il a été envisagé d'augmenter l'amortissement structural des produits isolants à base de laine minérale par l'ajout d'un latex à la composition de liant thermodurcissable, lors de la fabrication des produits isolants. Lorsque les quantités de latex étaient faibles, l'augmentation du facteur d'amortissement structural était insuffisante.

L'ajout de quantités trop importantes de latex à la composition aqueuse thermodurcissable a cependant conduit à la dégradation des performances mécaniques des produits isolant. Il a été observé en particulier une perte de rigidité des produits isolant et un regonflement dans le temps de ces produits.

Les inventeurs ont alors constaté avec surprise qu'il était possible d'utiliser des quantités plus importantes de latex en combinaison avec les compositions de liant thermodurcissables connues à condition de ne pas les mélanger avant application sur les fibres, mais d'appliquer les deux compositions séparément, par exemple au moyen de deux couronnes de pulvérisation.

La Demanderesse a ainsi mis au point un procédé d'améliorations des performances acoustiques d'un produit isolant à base de fibres minérales liées par un liant organique, comprenant l'application, sur des fibres minérales, d'une première composition de liant et d'une deuxième composition de liant, les deux compositions de liant étant appliquées séparément l'une de l'autre, simultanément ou successivement et ceci dans n'importe quel ordre, caractérisé par le fait que :

- la première composition de liant est un latex et est appliquée en une quantité supérieure à 5% en poids, de préférence comprise entre 6% et 50%, plus préférentiellement entre 8% et 25%, exprimée en matières sèches rapportées au poids des fibres minérales, et
- la deuxième composition de liant est une composition aqueuse thermodurcissable appliquée en une quantité comprise entre 2% et 12% en poids, de préférence entre 5% et 10%, exprimée en matières sèches rapportées au poids des fibres minérales.

Il a en effet été constaté de manière surprenante par les inventeurs que l'ajout séparé d'une quantité de latex supérieure à 5% en poids, exprimée en matières sèches rapportées au poids des fibres minérales, sur des fibres minérales, par rapport à la composition de liant thermodurcissable n'altérait pas ou peu la réticulation des composés contenus dans ladite composition thermodurcissable, et par conséquent ne modifiait pas ou peu les performances mécaniques des produits isolants ainsi obtenus. Les performances acoustiques de tels produits étaient en revanche améliorées.

Les produits d'isolation obtenus par le nouveau procédé avaient à la fois d'excellentes propriétés d'amortissement structural et des propriétés mécaniques comparables à celles des produits fabriqués en l'absence de latex.

Dans la présente demande, on entend par « latex », une émulsion ou une dispersion stable dans de l'eau ou dans un solvant aqueux d'une ou plusieurs substances polymères naturelles ou synthétiques, thermoplastiques ou thermodurcissables. Le ou les polymères peuvent être auto-émulsifiables ou dans le cas contraire, l'émulsion ou la dispersion est stabilisée par des agents de stabilisation appropriés (tensio-actifs, viscosifiants...). Le latex peut être auto-réticulant ou non.

La Demanderesse propose en particulier d'utiliser un latex, à base de polymère ayant une température de transition vitreuse (Tg) comprise entre -50°C et 35°C, de préférence comprise entre -10°C et 35°C. La température de transition vitreuse (Tg) est mesurée par analyse calorimétrique différentielle à balayage (en anglais, « DSC » pour *Differential Scanning Calorimetry),* selon la norme ISO 11357. La Tg du ou des polymères est choisie de manière à ce que l'amortissement structural « η » du produit isolant obtenu soit maximal sur la décade de fréquence entre 1 Hz et 10 kHz, de préférence sur l'intervalle de fréquence comprise entre 10 Hz et 1 kHz, à une température comprise entre 0°C et 40°C, de préférence comprise entre 10°C et 30°C, plus préférentiellement comprise entre 15°C et 25°C et encore plus préférentiellement pour une température voisine ou égale à 20°C.

Le facteur d'amortissement structural η d'un matériau correspond au ratio entre l'énergie dissipée sous forme de chaleur et l'énergie de déformation élastique. Il correspond donc à une caractéristique technique propre à la nature du matériau et traduit sa capacité à dissiper l'énergie, en particulier les ondes acoustiques. Plus le facteur d'amortissement structural est élevé, plus l'énergie dissipée est importante, plus le produit joue donc sa fonction d'amortissement structural. Ce facteur d'amortissement structural η varie en fonction de la température et de la fréquence de l'onde incidente. Pour une fréquence donnée, le facteur d'amortissement structural atteint sa valeur maximale à une température, dite température de transition vitreuse. Ce facteur d'amortissement structural η peut être estimé à l'aide d'un rhéomètre par analyse mécanique dynamique « DMA » ou de tout autre dispositif connu adéquat tel qu'un analyseur mécanique quasi statique « QMA ». Plus précisément, la mesure du facteur d'amortissement structural η du produit isolant obtenu selon l'invention est réalisée selon la norme ISO 18437 et selon l'article de C. Langlois, R. Panneton, et N. Atalla : Polynomial relations for quasi-static mechanical characterization of isotropic poroelastic materials, J. Acoust. Soc. Am., 110(6), 3032-3040 (2001). L'appareil de mesure utilisé par la demanderesse est l'analyseur mécanique quasi statique développé par Mecanum, avec lequel les tests de compressions sur le produit isolant sont effectués à basses fréquences de 10 Hz à 100 Hz et à température ambiante.

Avantageusement, le latex renferme un polymère, copolymère ou homopolymère, de type vinylique, de type acrylique ou de type styrénique. En outre, le latex peut être à base de de polyuréthanes ou de polysiloxanes.

On préfère tout particulièrement les latex de type vinylique, en particulier à fonctions ester pendantes, notamment à base d'acétate de vinyle. On préfère tout spécialement les latex à base d'homopolymère de poly(acétate de vinyle), mais on peut aussi citer comme latex avantageux, ceux à base de copolymère d'acétate de vinyle et notamment d'acide et/ou ester (méth) acrylique, d'ester maléique, d'oléfine et/ou de chlorure de vinyle.

D'autres latex intéressants peuvent être choisis parmi ceux renfermant un polymère de type acrylique, notamment un copolymère acrylonitrile/ester acrylique, ou styrène/acide ou ester acrylique ou styrène/acide ou ester acrylique silanisé (c'est-à-dire copolymérisé avec un monomère à insaturation éthylénique porteur d'au moins une fonction silane ou silanol).

On préfère encore plus particulièrement les latex de type styrénique, en particuliers les latex à base de styrène-acrylate ou de styrène-butadiène ou de styrène-butadiène carboxylés.

Dans une autre variante le latex peut être à base de polymères en émulsion bio-sourcés, autrement dit à base de polysaccharides obtenus à partir de macronomères de sucres issus de l'amidon dérivé du maïs, du riz, de la pomme de terre et du tapioca.

Dans une autre variante, le latex est un latex hybride formé à partir de polymères synthétiques (listés ci-dessus) et de polymères en émulsion bio-sourcés tels que les polysaccharides.

Dans la présente invention, il est nécessaire que la proportion de latex ajoutée à la composition de liant thermodurcissable soit supérieure à 5% en poids, de préférence entre 6% et 50%, plus préférentiellement entre 8% et 25%, et encore plus préférentiellement entre 9% et 15%, exprimées en matière sèches rapportées au poids des fibres minérales, afin d'atteindre un niveau satisfaisant de performances acoustiques pour les produits isolants.

En outre, le mode d'introduction du latex sur les fibres minérales joue un rôle très important dans la présente invention puisqu'il a été constaté que lorsque le latex est mélangé avec les constituants de la composition de liant thermodurcissable et que ce mélange est appliqué sur les fibres minérales de manière usuelle, les performances mécaniques du produit isolant obtenu étaient alors diminuées. Les inventeurs ont découvert que pour obtenir des produits isolants ayant à la fois de bonnes performances acoustiques et de bonnes performances mécaniques, il était essentiel d'appliquer sur les fibres minérales le latex, séparément, de la composition aqueuse thermodurcissable.

Dans la présente demande, on entend par « séparément » le fait que les deux compositions de liant ne sont en aucun cas en contact l'une avec l'autre avant leur application sur les fibres minérales. Autrement dit, elles ne sont pas mélangées avant d'être appliquées sur les fibres minérales.
Selon l'invention, la première composition de liant et la deuxième composition de liant sont appliquées, de manière séparée, sur les fibres simultanément ou successivement et ceci dans n'importe quel ordre ; autrement dit la première composition peut-être la deuxième composition ou inversement, au sens de l'invention.

De préférence, les deux compositions de liant sont appliquées sur les fibres minérales successivement. Plus préférentiellement, le latex est appliqué sur les fibres minérales après la composition aqueuse thermodurcissable.

Selon un mode de réalisation préféré, on peut pulvériser la composition aqueuse thermodurcissable à proximité de la couronne de pulvérisation du latex en phase aqueuse, notamment en disposant deux couronnes de pulvérisation superposées sur le trajet de la laine minérale en direction de l'organe de réception, une couronne (de préférence la première dans le sens de progression de la laine) pulvérisant la composition aqueuse thermodurcissable et l'autre couronne pulvérisant le latex.

La composition aqueuse thermodurcissable est, quant à elle, appliquée en une quantité comprise entre 2% et 12% en poids, de préférence entre 5% et 10%, encore plus préférentiellement égale à 8%, ladite quantité étant exprimée en matières sèches rapportées au poids des fibres minérales, afin de conférer au produit isolant des propriétés mécaniques satisfaisantes.

Selon une particularité du procédé selon l'invention, la deuxième composition de liant et la première composition de liant sont appliquées sur les fibres minérales de manière à ce que le rapport en poids de la composition aqueuse thermodurcissable au latex, exprimé en matières sèches, soit compris dans la fourchette allant de 2/1 à 1/5, et de préférence de 1/1 à 1/2.

Dans un premier mode de réalisation de l'invention, la deuxième composition de liant qui est une composition aqueuse thermodurcissable, appelée également composition aqueuse d'encollage, peut comprendre au moins un glucide choisi parmi les sucres hydrogénés, les sucres réducteurs, les sucres non-réducteurs et les mélanges de ceux-ci.

Dans la présente demande le terme « glucide » a un sens plus large qu'usuellement, car il englobe les oses et osides présentant au moins un groupe aldéhyde ou cétone (appelés sucres réducteurs), les sucres non-réducteurs constitués de plusieurs motifs glucidiques dont les carbones porteurs de l'hydroxyle hémi-acétalique sont impliqués dans les liaisons osidiques reliant les motifs entre eux, ainsi que les sucres hydrogénés (également appelés alditols ou alcools de sucres) qui sont les produits d'hydrogénation d'oses ou d'osides dans lesquels le groupe aldéhyde ou cétone a été réduit en fonction alcool.

Le glucide de la composition aqueuse thermodurcissable comprend avantageusement une certaine fraction de sucres hydrogénés. Cette teneur en sucres hydrogénés est avantageusement au moins égale à 50% en poids, de préférence au moins égale à 70% en poids, et en particulier au moins égale à 95% en poids.

Selon un mode de réalisation particulier, le glucide est exempt de sucres réducteurs et/ou de sucres non-réducteurs. Le glucide peut ainsi être constitué uniquement de sucres hydrogénés. Ce mode de réalisation est intéressant car il conduit à des produits isolants particulièrement peu colorés.

Par « sucre hydrogéné », on entend l'ensemble des produits résultant de la réduction d'un saccharide choisi parmi les monosaccharides, disaccharides, oligosaccharides et polysaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis avantageusement parmi les produits d'hydrogénation de monosaccharides, disaccharides, oligosaccharides et leur mélanges, de préférence dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes.

On utilisera de manière particulièrement préférée un sucre hydrogéné choisi dans le groupe formé par le maltitol, le xylitol, le sorbitol et les produits d'hydrogénation d'hydrolysats d'amidon ou de matières lignocellulosiques et leurs mélanges.

Les sucres réducteurs conforment à la présente invention sont des monosaccharides, des oligosaccharides, des polysaccharides ou des mélanges de ces composés.

A titre d'exemple de monosaccharide, on peut citer le glucose, le galactose, le mannose et le fructose.

Par « oligosaccharide » on entend un saccharide renfermant 2 à 10 motifs d'oses, de préférence au plus 5.

A titre d'exemple d'oligosaccharide, on peut citer le lactose, le maltose, l'isomaltose et le cellobiose.

Les polysaccharides conformes à l'invention sont choisis parmi les polysaccharides ayant une masse molaire moyenne en nombre inférieure à 100000, de préférence inférieure à 50000 et avantageusement inférieure à 10000.

A titre d'exemple de polysaccharide préféré, on peut citer les dextrines. Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines selon la présente invention présentent un équivalent en dextrose DE (« Dextrose Equivalent » en anglais) supérieur ou égal à 5, de préférence supérieur ou égal à 15.

De manière conventionnelle, l'équivalent en dextrose DE est défini par la relation suivante :

[Formule 1]

$$DE = 100 \times \left( \frac{\text{nombre de liaisons glycosidiques rompues}}{\text{nombre de liaisons glycosidiques dans l'amidon initial}} \right)$$

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

De préférence, le sucre réducteur est choisi parmi le glucose, les polysaccharides composés majoritairement (à plus de 50 % en poids) de motifs de glucose et les mélanges de ces composés.

Les sucres non-réducteurs sont de préférence choisis parmi les diholosides tels que le tréhalose, les isotréhaloses, le saccharose, et les isosaccharoses (« isosucroses » en anglais); les triholosides tels que le mélézitose, le gentianose, le raffinose, l'erlose et l'umbelliférose; les tétraholosides tels que le stachyose; et les pentaholosides tels que le verbascose.

On préfère le saccharose et le tréhalose, et mieux encore le saccharose.

Dans une réalisation particulière de l'invention, lorsque la composition aqueuse thermodurcissable comprend au moins un glucide choisi parmi les sucres hydrogénés, les sucres réducteurs, les sucres non-réducteurs et les mélanges de ceux-ci, ladite composition peut comprendre en outre au moins un acide polycarboxylique monomère ou un sel ou anhydride d'un tel acide, L'anhydride d'un tel acide peut être l'anhydride maléique, l'anhydride succinique ou l'anhydride phtalique.

Cependant, le ou les acides polycarboxyliques utilisés dans la présente invention sont de préférence des acides polycarboxyliques oligomères de masse molaire inférieure à 2000 g.mol$^{-1}$ formés de1 à 6 motifs de monomères. Dans une autre variante préférée, le ou les acides polycarboxyliques utilisés dans la présente invention sont des acides polycarboxyliques monomères. Autrement dit, dans un mode de réalisation préféré de la présente invention ce terme n'englobe pas les polymères obtenus par polymérisation d'acides carboxyliques monomères, tels que les homopolymères ou copolymères d'acide acrylique ou d'acide méthacrylique.

On utilisera de préférence des acides polycarboxyliques choisis dans le groupe constitué des acides dicarboxyliques, acides tricarboxyliques et acides tétracarboxyliques.

Les acides dicarboxyliques sont par exemple choisis dans le groupe formé par l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique. Les acides tricarboxyliques sont par exemple choisis dans le groupe formé par l'acide citrique, l'acide tricarballylique, l'acide 1,2,4-butanetricarboxylique, l'acide aconitique, l'acide hémimellitique, l'aci-de trimélitique et l'acide trimésique. Les acides tétracarboxyliques sont par exemple l'acide 1,2,3,4-butanetétracarboxylique et l'acide pyroméllitique.

L'acide polycarboxylique particulièrement préféré est l'acide citrique.

La quantité d'acide polycarboxylique introduite dans la composition aqueuse thermodurcissable peut représenter de 10% à 90% en poids, de préférence de 30% à 80% en poids des matières sèches de la composition aqueuse thermodurcissable.

Dans une autre réalisation particulière de l'invention, lorsque la composition aqueuse thermodurcissable comprend au moins un glucide choisi parmi les sucres hydrogénés, les sucres réducteurs, les sucres non-réducteurs et les mélanges de ceux-ci, ladite composition peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition aqueuse thermodurcissable peut représenter de 1% à 20% en poids, de préférence de 2% à 10% en poids des matières sèches de la composition aqueuse thermodurcissable.

Dans un mode de réalisation particulièrement préféré la composition aqueuse thermodurcissable contient :

- un sucre hydrogéné, de préférence le maltitol, en tant que glucide,
- l'acide citrique comme acide polycarboxylique, et
- l'hydrophosphite de sodium en tant que catalyseur.

D'une manière générale, lorsque la composition aqueuse thermodurcissable comprend au moins un glucide choisi parmi les sucres hydrogénés, les sucres réducteurs, les sucres non-réducteurs et les mélanges de ceux-ci, ladite composition peut comprendre en outre les additifs conventionnels ci-après dans les proportions suivantes calculées sur la base de 100 parts en poids de sucres hydrogénés, de sucres réducteurs, de sucres non-réducteurs et d'acide polycarboxylique:

- 0 à 5 parts de silane, en particulier un aminosilane ou un epoxysilane,
- 0 à 20 parts d'huile, de préférence 4 à 15 parts,
- 0 à 5 parts d'un silicone.

Le rôle des additifs est connu et brièvement rappelé : le silane est un agent de couplage entre les fibres et le liant, et joue également le rôle d'agent anti-vieillissement; les huiles sont des agents anti-poussières et hydrophobes ; le polyol jouent le rôle de plastifiant et le silicone est un agent hydrophobant qui a pour fonction de réduire l'absorption d'eau par le produit d'isolation.

Dans un deuxième mode de réalisation de l'invention, la deuxième composition de liant qui est une composition aqueuse thermodurcissable peut comprendre au moins une résine phénolique aminée constituée essentiellement de condensats de phénol-formaldéhyde et de condensats phénol-formaldéhyde-amine.

Dans le domaine technique des résines phénol-formaldéhyde, on distingue principalement deux familles, à savoir :

- les résines novolaque préparées en milieu acide et
- les résols obtenus par catalyse basique.

Les résines phénoliques de la présente invention font partie de cette deuxième famille.

Les résines résols sont obtenues en milieu basique par réaction de phénol avec un excès de formaldéhyde, le rapport molaire formaldéhyde/phénol étant typiquement compris entre 2 et 4, chaque molécule de phénol pouvant potentiellement réagir avec trois molécules de formaldéhyde.

Les résines résols contiennent de nombreuses fonctions méthylol portées par un noyau aromatique, qui constitue les sites de réticulation par déshydratation/libération de formol. Ces résines sont essentiellement constituées de condensats phénol-formaldéhyde (PF), de phénol résiduel et de formaldéhyde résiduel. La composition aqueuse thermodurcissable, selon l'invention, peut comprendre ces dites résines, dans un autre mode de réalisation. En milieu acide, ces dites résines réagissent, c'est-à-dire polymérisent, très rapidement à température ambiante et précipitent.

Ces résines de type résols constituées essentiellement de condensats phénol-formaldéhyde (PF) et de phénol et formaldéhyde résiduels peuvent, après neutralisation du catalyseur, être mélangées avec de l'urée qui sert principalement de co-solvant améliorant la diluabilité de la résine et d'agent de piégeage du formaldéhyde résiduel. De tels résols et leur préparation sont décrits en détails dans la demande WO 01/96254 et sont incorporés dans la présente demande. Ces résines sont essentiellement constituées de condensats phénol-formaldéhyde (PF) et de condensats urée-formaldéhyde (UF). L'ajout d'urée décrit dans cette demande WO 01/96254 n'améliore toutefois pas sensiblement la stabilité à pH acide des résols. Ces résines décrites dans cette demande peuvent être utilisées dans la présente demande.

Cependant, la résine phénolique aminée préférée pouvant être utilisée dans la présente demande est une résine hydrosoluble stable à pH acide, même à pH très acide compris entre 1 et 2. Cette bonne stabilité est obtenue grâce à une étape réactionnelle supplémentaire qui consiste à faire réagir des résines résols contenant essentiellement des condensats phénol-formaldéhyde, du phénol et du formaldéhyde avec une amine, de préférence une monoalkanolamine, et en particulier la monoéthanolamine, afin d'obtenir une résine phénolique aminée constituée essentiellement de condensats de phénol-formaldéhyde (PF), et de condensats phénol-formaldéhyde-amine (PFA).

En effet, cette alkanolamine réagit selon la réaction de Mannich avec les condensats phénol-formaldéhyde le phénol et le formaldéhyde pour former des condensats phénol-formaldéhyde-amine. A la fin de la réaction le mélange réactionnel peut être acidifié sans que cela ne provoque la polymérisation à température ambiante. Ces résines phénoliques aminées sont donc considérées comme stables en milieu acide. Leur synthèse est décrite dans les demandes WO2008/043960 et WO2008/043961 de la Demanderesse et est incorporée dans la présente demande. Elles se distinguent également par le fait d'être presque exemptes de condensats urée-formaldéhyde qui sont présents uniquement à l'état de traces. Ces condensats urée-formaldéhyde sont présents en quantités importantes dans de nombreuses résines phénoliques et présentent une stabilité thermique insuffisante, libérant du formaldéhyde par décomposition thermique.

De manière connue, on peut ajouter à la résine phénolique aminée, après réaction avec la monoalkanolamine, refroidissement du mélange réactionnel et acidification, jusqu'à 25 % en poids, de préférence entre 10 % et 20 % en poids d'urée, ces quantités étant exprimées par rapport au poids sec total de résine phénolique aminée et d'urée. L'urée sert principalement de co-solvant dans ce type de résine.

D'une manière générale, ladite composition aqueuse thermodurcissable comprenant une résine phénolique aminée comprend encore les additifs suivants, pour 100 parts en poids sec de résine et le cas échéant d'urée :

- 0 à 10 parts d'un catalyseur de polycondensation, par exemple le sulfate d'ammonium, de préférence moins de 7 parts,

- 0 à 2 parts de silane, en particulier un aminosilane,
- 0 à 20 parts d'huile, de préférence 6 à 15 parts.

Le rôle des additifs est connu et brièvement rappelé : le sulfate d'ammonium sert de catalyseur de polycondensation (dans l'étuve à chaud) après la pulvérisation de la composition d'encollage sur les fibres ; le silane est un agent de couplage entre les fibres et la résine, et joue également le rôle d'agent anti-vieillissement ; les huiles sont des agents anti-poussières et hydrophobes.

Dans un mode de réalisation particulièrement préféré la composition aqueuse thermodurcissable contient:

- une résine phénolique aminée,
- de l'urée, et
- un sulfate d'ammonium comme catalyseur.

Par conséquent, dans la présente invention, la composition aqueuse thermodurcissable comprend au moins un glucide choisi parmi les sucres hydrogénés, les sucres réducteurs, les sucres non-réducteurs et les mélanges de ceux-ci et/ou une résine phénolique aminée constituée essentiellement de condensats de phénol-formaldéhyde et de condensats phénol-formaldéhyde-amine.

En outre, le total des matières apportées sur la laine minérale par le latex et la composition aqueuse thermodurcissable représente en général de l'ordre 9% à 37%, notamment 11% à 30%, exprimée en matières sèches rapportées au poids des fibres minérales.

Les fibres minérales peuvent être des fibres de verre ou des fibres de roche ou des fibres de laitier, ou des mélanges de celles-ci, de préférence des fibres de verre ou de roche, et plus préférentiellement des fibres de verre.

Les fibres minérales ainsi liées à l'aide dudit latex et de ladite composition thermodurcissable sont ensuite traitées en étuve en vue de la polymérisation de la résine. Il convient d'ailleurs de veiller à ce que les conditions du traitement thermique en étuve (température, temps de séjour) n'engendrent pas de dégradation thermique du latex. En règle générale, les conditions classiques de fabrication sont tout à fait compatibles avec l'utilisation de latex selon l'invention.

La présente demande a également pour objet un produit isolant à base de fibres minérales liées par un liant organique obtenu par le procédé décrit ci-dessus et présentant :

- une épaisseur comprise entre 10 et 300 mm, de préférence entre 25 et 200 mm, mesurée selon la norme EN 823:2013 et
- une masse volumique comprise entre 30 et 200 kg/m$^3$, de préférence entre 50 et 150 kg/m$^3$.

L'épaisseur comprise entre 10 et 300 mm et la masse volumique comprise entre 30 et 200 kg/m$^3$ selon l'invention permettent au produit isolant d'avoir les performances mécaniques nécessaires pour les applications acoustiques visées, tels que les plafonds, les planchers, les cloisons, les panneaux sandwichs...

De plus, la sélection d'une telle valeur d'épaisseur et d'une telle valeur de masse volumique offre un compromis satisfaisant entre l'exigence de rigidité d'une part et la performance de l'isolation acoustique d'autre part pour le produit isolant.

Selon l'invention, le produit isolant à base de fibres minérales est pourvu d'un latex et d'une composition aqueuse thermodurcissable, tels que décrits précédemment. Les inventeurs ont constaté avec surprise que le latex ayant les caractéristiques telles que définies précédemment conférait au produit isolant de bonnes propriétés d'amortissement structural, contribuant à une isolation acoustique amélioré dudit produit, tout en conservant de bonnes propriétés mécaniques.

Cette amélioration de l'isolation acoustique est due au facteur d'amortissement structural η (déterminé par analyse mécanique quasi statique) du produit isolant obtenu selon l'invention, dont la valeur est supérieure ou égale à 5% et de préférence supérieure ou égale à 10%.

En effet, il a été constaté par les inventeurs que le latex tel que décrit précédemment permet d'obtenir un gain en termes d'isolation acoustique compris entre 1 dB et 7 dB pour le produit isolant selon l'invention, comparé à un produit isolant ne comprenant pas de latex.

Par exemple, l'isolation acoustique d'un plafond « D$_{nfw}$ » est mesurée selon la norme ISO 10848-1, puis calculé selon la norme ISO 717-1. L'isolation acoustique d'une cloison « R$_w$ » est mesurée selon la norme ISO 10140-2, puis calculé selon la norme ISO 717-1. L'isolation acoustique d'un plancher « L$_{nw}$» est mesurée selon la norme ISO 10140-3, puis calculé selon la norme ISO 717-2.

Comme mentionné ci-dessus, le produit isolant selon l'invention présente des propriétés mécaniques et acoustiques intéressantes, puisque celui-ci peut présenter un module d'Young élevé compris entre 0,01 et 5 MPa, de préférence entre 0,1 et 4 MPa, et plus préférentiellement entre 0,05 et 2 MPa et une résistivité à l'écoulement d'air faible comprise entre 10 et 200 kPa.s/m$^2$, de préférence entre 30 et 80 kPa.s/m$^2$. La mesure du module d'Young est réalisée selon la norme ISO 18437 et selon l'article de C. Langlois, R.Panneton, et N. Atalla : Polynomial relations for quasi-static mechanical characterization of isotropic poroelastic materials, J. Acoust. Soc. Am., 110(6), 3032-3040 (2001). L'appareil de mesure utilisé par la demanderesse est l'analyseur mécanique quasi statique « QMA » développé par Mecanum. La mesure de la résistivité à l'écoulement d'air est réalisée selon la norme ISO 9053-1.

Le produit isolant à base de fibres minérales est particulièrement à base de fibres de verre ou de fibres de roche, ou des fibres de laitier, ou des mélanges de ceux-ci, de préférence à base de fibres de verre ou de roche, et plus préférentiellement à base de fibres de verre.

Le diamètre des fibres minérales est avantageusement compris entre 1 et 25 microns.

Les fibres minérales peuvent être crêpées à un taux de crêpage compris entre 1,5 et 5. Le taux de crêpage a une influence sur la résistivité à l'écoulement d'air et sur le module d'Young. Le taux de crêpage est de préférence entre 2 et 5, voire entre 2,5 et 5, ou encore entre 3 et 5 pour diminuer encore la résistivité à l'écoulement d'air et augmenter le module d'Young. En effet, le crêpage favorise l'orientation des fibres selon une direction perpendiculaire Z: plus le taux de crêpage est élevé, plus l'orientation des fibres selon Z est importante et plus la résistivité à l'écoulement d'air est diminuée et le module d'Young augmenté.

Lorsque le produit isolant est à base de fibres de verre, il présente en outre un micronaire compris entre 5 l/min et 80 l/min. Le micronaire est représentatif de la finesse des fibres de verre. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit " appareil micronaire ".

Lorsque le produit isolant est à base de fibres de roche, il présente en outre un fasonaire compris entre 200 et 300. De préférence, le fasonaire est compris entre 200 et 290, voire entre 200 et 280, ou encore entre 200 et 270. Le fasonaire est représentatif de la finesse des fibres de roche. La mesure du fasonaire est une détermination de l'indice de finesse des fibres par une méthode similaire à celle du micronaire selon les normes ASTM-D-1448 ou DIN 53941. Le fasonaire est égal à la perte de charge ou différence de débit d'un courant gazeux traversant une éprouvette constituée d'une touffe de fibres minérales de masse donnée (égale à 5 g pour les mesures selon l'invention). La touffe de fibres, exemptes de liant ou de tout autre composant non fibreux, est comprimée dans une chambre cylindrique de volume prédéterminé. Le débit de gaz étant maintenu constant, on mesure à l'aide d'une colonne d'eau graduée en unités conventionnelles appelées fasonaires, la perte de charge à travers l'éprouvette. Le fasonaire est ainsi exprimé en millimètres de colonne d'eau pour 5 g (masse de l'éprouvette).

Selon une première variante, le produit isolant est utilisé pour réaliser des plafonds et dans ce cas, le produit isolant présente :

- une épaisseur comprise entre 10 et 80 mm, de préférence entre 20 et 50 mm, mesurée selon la norme EN 823:2013,
- une masse volumique comprise entre 30 et 200 kg/m$^3$, de préférence entre 50 et 140 kg/m$^3$,
- un module d'Young compris entre 0,1 et 5 MPa, de préférence entre 0,5 et 2 MPa, et
- une résistivité à l'écoulement d'air comprise entre 20 et 110 kPa.s/m$^2$, de préférence entre 30 et 80 kPa.s/m$^2$.

Selon une deuxième variante, le produit isolant est utilisé pour réaliser des planchers et dans ce cas, le produit isolant présente :

- une épaisseur comprise entre 10 et 100 mm, de préférence entre 10 et 50 mm, mesurée selon la norme EN 823:2013,
- une masse volumique comprise entre 30 et 160 kg/m$^3$, de préférence entre 50 et 120 kg/m$^3$,
- un module d'Young compris entre 0,01 et 2 MPa, de préférence entre 0,03 et 0,5 MPa, et
- une résistivité à l'écoulement d'air comprise entre 10 et 200 kPa.s/m$^2$.

Selon une troisième variante, le produit isolant est utilisé pour réaliser des murs, en particulier des systèmes d'isolation thermique par l'extérieur (ITE) (*appelé en Anglais « ETICS » External Thermal Insulation Composite Systems*) et dans ce cas, le produit isolant présente :

- une épaisseur comprise entre 15 et 300 mm, de préférence entre 40 et 220 mm, mesurée selon la norme EN 823:2013,
- une masse volumique comprise entre 30 et 200 kg/m$^3$, de préférence entre 50 et 140 kg/m$^3$,

- un module d'Young compris entre 0,05 et 5 MPa, de préférence entre 0,1 et 2 MPa, et
- une résistivité à l'écoulement d'air comprise entre 10 et 200 kPa.s/m$^2$, de préférence entre 30 et 120 kPa.s/m$^2$.

Selon une quatrième variante, le produit isolant est utilisé pour réaliser des murs, en particulier des panneaux sandwichs et dans ce cas, le produit isolant présente :

- une épaisseur comprise entre 10 et 100 mm, de préférence entre 30 et 60 mm, mesurée selon la norme EN 823:2013,
- une masse volumique comprise entre 30 et 200 kg/m$^3$, de préférence entre 50 et 100 kg/m$^3$,
- un module d'Young compris entre 0,05 et 5 MPa, de préférence compris entre 0,05 et 2 MPa, et
- une résistivité à l'écoulement d'air comprise entre 10 et 200 kPa.s/m$^2$.

On entend par « panneau sandwich » dans la présente demande, une structure multicouche comprenant des parements rigides séparés par une âme isolante.

L'invention a également pour objet l'utilisation d'un produit isolant à base de fibres minérales tel que décrit ci-dessus pour améliorer l'isolation acoustique dans les domaines du bâtiment tel que les plafonds, les planchers, les parement muraux et les cloisons, des transports tels que l'automobile, les trains et les bateaux, et de l'industrie chimique ou pétrochimique, notamment pour l'isolation de conduites cylindriques ou rectangulaires, de cuves, de silos.

L'isolation acoustique a pour but de réduire la transmission du son. L'utilisation du produit isolant selon l'invention n'est pas limitée aux applications énoncées ci-dessus.

**Exemples**

Exemples 1 à 5 :

On prépare une composition de liant thermodurcissables comprenant les constituants figurant dans le tableau 1 exprimés en parts pondérales.

La composition **1** préparée à 30% d'extrait sec comprend 48 parts en poids de maltitol (en tant que sucre hydrogéné), 52 parts en poids d'acide citrique, et 5 parts en poids d'hypophosphite de sodium.

La composition 1 est utilisée dans les exemples 1 à 5 pour former des produits isolants à base de fibres de verre.

La quantité de liant thermodurcissable déposée sur les fibres de verre est égale à 8% en poids exprimées en matières sèches rapportées au poids des fibres minérales.

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation de liant est disposée au-dessous de l'assiette de fibrage de façon à répartir régulièrement la composition thermodurcissable sur la laine de verre venant d'être formée.

La laine minérale ainsi liée est collectée sur un convoyeur à bande équipé de caissons d'aspiration internes qui retiennent les fibres minérales sous forme d'un feutre ou d'une nappe à la surface du convoyeur. Le convoyeur circule ensuite dans une étuve où les constituants de la composition thermodurcissable polymérisent pour former un liant.

Par rapport à cette technique de fabrication classique, une deuxième couronne de pulvérisation, selon l'invention, est montée juste au-dessous de la première couronne de façon à projeter sur la laine une autre composition de liant qui est un latex et qui viendra s'ajouter de manière séparée à la composition thermodurcissable sur les fibres minérales (cf. exemple 5).

L'essai de références (réf.1) est réalisé sans pulvérisation de latex (cf. exemple 1).

Les autres essais (cf. exemples 2 à 5) sont réalisés à l'aide d'un latex «Appretan PL10073 A» commercialisé sous la marque ARCHROMA et consistant en une dispersion aqueuse de styrène-acrylate à 50% d'extrait sec, ayant une température de transition vitreuse (Tg) égale à -6°C (mesurée par DSC à 40°C/min).

Dans les exemples 2 à 4 (exemples comparatifs), le latex est pulvérisé avec la composition thermodurcissable (conjointement, en mélange) à partir de la même couronne de pulvérisation avec une quantité de latex pulvérisée correspondant respectivement à 5%, 10% et 15% en poids exprimées en matières sèches rapportées au poids des fibres de verre.

Dans l'exemple 5, selon l'invention (inv.), une quantité de latex égale à 10% en poids exprimées en matières sèches rapportées au poids des fibres de verre, est appliquée sur les fibres de verre en pulvérisation séparée de la composition thermodurcissable à l'aide d'une autre couronne de pulvérisation.

Pour l'ensemble de ces essais, la quantité d'eau de dilution est ajustée toute la journée afin de conserver un taux d'humidité du matelas non cuit à 8-10%.

Les produits isolants obtenus présentent une masse volumique de 80 kg/m$^3$ et une épaisseur de 40 mm.

Les produits obtenus sont soumis aux mesures des caractéristiques techniques suivantes :

- le module d'Young (en MPa) : cette grandeur caractérise la rigidité du produit ;
- le facteur d'amortissement structural (en %): cette grandeur caractérise la capacité du produit isolant à dissiper les vibrations acoustiques en chaleur. Ce facteur est donc corrélé à la performance acoustique du produit. Le module d'Young et le facteur d'amortissement structural sont mesurés à l'aide de l'analyseur mécanique quasi statique « QMA » développé par Mecanum à une fréquence comprise entre 10 Hz et 100 Hz et à une température comprise entre 10°C et 30°C ;

- la résistance à la compression (en kPa, pour une réduction d'épaisseur de 25%, sur des échantillons de 20x20 cm) / résistance à l'arrachement (en kPa, sur des échantillons de 10×10cm) sont mesurées de façon classique après fabrication et après vieillissement accéléré en autoclave ;
- le regonflement après autoclave (en %) est mesuré de façon classique par mesure de l'épaisseur du produit avant et après vieillissement.

**Résultats**

[Table 1]

| Exemples | 1 (réf. 1) | 2 | 3 | 4 | 5 (inv) |
|---|---|---|---|---|---|
| **Composition 1 (part)** | | | | | |
| Maltilite® 5575[1] | 48 | 48 | 48 | 48 | 48 |
| Acide citrique | 52 | 52 | 52 | 52 | 52 |
| Hypophosphite de sodium | 5 | 5 | 5 | 5 | 5 |
| **Latex (%/fibre)** | 0 | | | | |
| pulvérisation en mélange | | 5 | 10 | 15 | |
| pulvérisation séparée | | | | | 10 |
| **Propriétés** | | | | | |
| Module d'Young (MPa) | 0,640 | 0,500 | 0,400 | 0,175 | 0,570 |
| Facteur d'amortissement (%) | 7,6 | 11,1 | 17,4 | 23,0 | 15,1 |
| Compression à 250% (kPa) | 54 | 41 | 40 | 23 | 45 |
| Arrachement (kPa) | 80 | 81 | 79 | 74 | 88 |
| Regonflement après autoclave (%) | 2,8 | 4,5 | 9,8 | 19 | 7,3 |
| [1]Maltilite® 5575 commercialise par TERREOS : maltitol à 75% d'extrait sec | | | | | |

On constate que l'ajout de latex à une composition de liant thermodurcissable permet d'augmenter le facteur d'amortissement structural du produit isolant (comparaison de l'exemple 1 avec les exemples 2-5). Les performances acoustiques du produit isolant sont par conséquent améliorées par l'addition dudit latex.

Cependant, lorsque la quantité de latex ajoutée en mélange avec la composition thermodurcissable augmente (quantité de latex supérieure à 5 % c'est-à-dire égale à 10% ou 15% en poids exprimées en matières sèches rapportées au poids des fibres de verre - voir exemple 2, 3 et 4), on constate que le module d'Young, la résistance à la compression, la résistance à l'arrachement diminuent et le regonflement augmente; ce qui se traduit par une diminution des performances mécaniques du produit isolant.

La pulvérisation du latex séparément de la composition thermodurcissable à l'aide d'une deuxième couronne, selon l'invention (exemple 5) permet en revanche d'augmenter le facteur d'amortissement structural et donc d'améliorer les performances acoustiques du produit isolant (comparaison de l'exemple 5 avec l'exemple 1) tout en maintenant les performances mécaniques du produit isolant (cf. le module d'Young, la résistance à la compression, la résistance à l'arrachement / comparaison de l'exemple 5 avec l'exemple 3 et l'exemple 1).

En outre, si l'on compare l'exemple 5 (selon l'invention) et la référence 1 (exemple 1, sans latex), on constate que le produit isolant obtenu selon le procédé de l'invention présente à la fois des propriétés d'amortissement améliorées (facteur d'amortissement structural égal à 15,1 pour le produit selon l'invention contre 7,6 pour le produit fabriqué sans latex) et des propriétés mécaniques comparables à celles du produit isolant fabriqué sans latex (cf. module d'Young : 0,640/0,570, résistance à la compression : 45/54, résistance à l'arrachement 88/80, à l'exception du regonflement 7, 3/2, 8).

Afin de montrer le gain acoustique obtenu entre un produit isolant obtenu selon l'exemple 1 et un produit isolant obtenu selon l'exemple 5, une simulation numérique a été effectué dans le cas de l'utilisation de ces produits isolants dans un plafond. Le modèle acoustique est basé sur la méthode des matrices de transfert (cf. M.L Munjal, Response Of A Multi-layered Infinite Plate To An Oblique Plane Wave By Means Of Transfer Matrices, Journal of Sound and Vibration, Volume 162, Issue 2, 8 April 1993, Pages 333-343).

Il a été trouvé une amélioration acoustique de 3 dB sur l'isolement global $D_{nfw}$ entre un produit isolant obtenu selon l'exemple 1, sans latex, utilisé dans un plafond (épaisseur de 40 mm, masse volumique de 80 kg/m³, module d'Young de 0,640 MPa, amortissement structural de 7,6%) et un produit isolant obtenu selon l'exemple 5, pourvu de latex, utilisé dans un plafond (épaisseur de 40 mm, masse volumique de 80 kg/m³, module d'Young de 0,570 MPa, amortissement structural de 15,1%).

## Revendications

1. Procédé pour améliorer les performances acoustiques d'un produit isolant à base de fibres minérales liées par un liant organique, comprenant l'application, sur des fibres minérales, d'une première composition de liant et d'une deuxième composition de liant, les deux compositions de liant étant appliquées séparément l'une de l'autre, simultanément ou successivement et ceci dans n'importe quel ordre, **caractérisé par le fait que** :

   - la première composition de liant est un latex et est appliquée en une quantité supérieure à 5% en poids, de préférence comprise entre 6% et 50%, plus préférentiellement entre 8% et 25%, exprimée en matières sèches rapportées au poids des fibres minérales, et
   - la deuxième composition de liant est une composition aqueuse thermodurcissable comprenant au moins un glucide choisi parmi les sucres hydrogénés, les sucres réducteurs, les sucres non-réducteurs et les mélanges de ceux-ci et/ou une résine phénolique aminée constituée essentiellement de condensats de phénol-formaldéhyde et de condensats phénol-formaldéhyde-amine, ladite composition étant appliquée en une quantité comprise entre 2% et 12% en poids, de préférence entre 5% et 10%, exprimée en matières sèches rapportées au poids des fibres minérales.

2. Procédé selon la revendication 1, dans lequel le latex est à base de polymère ayant une température de transition vitreuse (Tg) comprise entre -50°C et 35°C, de préférence comprise entre -10°C et 35°C.

3. Procédé selon la revendication 2, dans lequel le latex renferme un polymère, copolymère ou homopolymère, de type vinylique, de type acrylique ou de type styrénique.

4. Procédé selon la revendication 1, dans lequel le glucide contient au moins 50% en poids, de préférence au moins 70% en poids, et en particulier au moins 95% en poids de sucres hydrogénés.

5. Procédé selon l'une quelconque des revendications 1 à 4, dans lequel le glucide est exempt de sucres réducteurs et/ou de sucres non-réducteurs.

6. Procédé selon l'une quelconque des revendications 1 à 5, dans lequel le glucide est un sucre hydrogéné choisi parmi les produits d'hydrogénation de monosaccharides, disaccharides, oligosaccharides et leurs mélanges.

7. Procédé selon la revendication 6, dans lequel le sucre hydrogéné est choisi dans le groupe formé par le maltitol, le xylitol, le sorbitol et les produits d'hydrogénation d'hydrolysats d'amidon ou de matières ligno-cellulosiques et leurs mélanges.

8. Procédé selon l'une quelconque des revendications 1 à 7, **caractérisé en ce que** la composition aqueuse thermodurcissable comprenant au moins un glucide choisi parmi les sucres hydrogénés, les sucres réducteurs, les sucres non-réducteurs et les mélanges de ceux-ci, comprend en outre au moins un acide polycarboxylique monomère ou un sel ou anhydride d'un tel acide.

9. Procédé selon l'une quelconque des revendications précédentes, **caractérisé en ce que** le rapport en poids de la composition aqueuse thermodurcissable au latex, exprimé en matières sèches, est compris dans la fourchette allant de 2/1 à 1/5, et de préférence de 1/1 à 1/2.

10. Produit isolant à base de fibres minérales liées par un liant organique obtenu par le procédé selon l'une quelconque des revendications 1 à 9, ledit produit isolant présentant :

    - une épaisseur comprise entre 10 et 300 mm, de préférence entre 25 et 200 mm, mesurée selon la norme EN 823:2013 et

- une masse volumique comprise entre 30 et 200 kg/m$^3$, de préférence entre 50 et 150 kg/m$^3$.

11. Produit isolant à base de fibres minérales selon la revendication 10, **caractérisé par le fait qu'**il présente un module d'Young compris entre 0,01 et 5 MPa et une résistivité à l'écoulement d'air comprise entre 10 et 200 kPa.s/m$^2$.

12. Produit isolant à base de fibres minérales selon l'une quelconque des revendications 10 à 11, **caractérisé en ce que** les fibres minérales sont des fibres de verre ou des fibres de roche ou des fibres de laitier, ou des mélanges de celles-ci.

13. Utilisation d'un produit isolant à base de fibres minérales selon l'une quelconque des revendications 10 à 12, pour améliorer l'isolation acoustique dans les domaines du bâtiment, des transports et de l'industrie chimique ou pétrochimique.

**Patentansprüche**

1. Verfahren zum Verbessern der Schalldämmeigenschaften eines Isolierprodukts auf Basis von Mineralfasern, die durch ein organisches Bindemittel gebunden sind, umfassend das Aufbringen einer ersten Bindemittelzusammensetzung und einer zweiten Bindemittelzusammensetzung auf Mineralfasern, wobei die beiden Bindemittelzusammensetzungen getrennt voneinander, gleichzeitig oder nacheinander und dies in beliebiger Reihenfolge aufgebracht werden, **dadurch gekennzeichnet, dass:**

   - die erste Bindemittelzusammensetzung ein Latex ist und in einer Menge von mehr als 5 Gew.-%, vorzugsweise zwischen 6 % und 50 %, stärker bevorzugt zwischen 8 % und 25 %, ausgedrückt als Trockenmasse, bezogen auf das Gewicht der Mineralfasern, aufgebracht wird, und
   - die zweite Bindemittelzusammensetzung eine wärmehärtbare wässrige Zusammensetzung ist, umfassend mindestens ein Kohlenhydrat, ausgewählt aus hydrierten Zuckern, reduzierenden Zuckern, nicht reduzierenden Zuckern und Mischungen davon, und/oder ein Phenolaminoharz, im Wesentlichen bestehend aus Phenol-Formaldehyd-Kondensaten und Phenol-Formaldehyd-Amin-Kondensaten, wobei die Zusammensetzung in einer Menge zwischen 2 Gew.-% und 12 Gew.-%, vorzugsweise zwischen 5 % und 10 %, ausgedrückt als Trockenmasse, bezogen auf das Gewicht der Mineralfasern, aufgebracht wird.

2. Verfahren nach Anspruch 1, wobei der Latex auf einem Polymer mit einer Glasübergangstemperatur (Tg) zwischen -50 °C und 35 °C, vorzugsweise zwischen -10 °C und 35 °C, basiert.

3. Verfahren nach Anspruch 2, wobei der Latex ein Polymer, Copolymer oder Homopolymer von einer Art Vinyl, von einer Art Acryl oder von einer Art Styrol enthält.

4. Verfahren nach Anspruch 1, wobei das Kohlenhydrat mindestens 50 Gew.-%, vorzugsweise mindestens 70 Gew.-% und insbesondere mindestens 95 Gew.-% hydrierte Zucker enthält.

5. Verfahren nach einem der Ansprüche 1 bis 4, wobei das Kohlenhydrat frei von reduzierenden Zuckern und/oder nicht reduzierenden Zuckern ist.

6. Verfahren nach einem der Ansprüche 1 bis 5, wobei das Kohlenhydrat ein hydrierter Zucker ist, ausgewählt aus den Hydrierungsprodukten von Monosacchariden, Disacchariden, Oligosacchariden und Mischungen davon.

7. Verfahren nach Anspruch 6, wobei der hydrierte Zucker aus der Gruppe ausgewählt ist, die aus Maltitol, Xylitol, Sorbitol und Hydrierungsprodukten von Stärkehydrolysaten oder lignozellulosischen Materialien und Mischungen davon besteht.

8. Verfahren nach einem der Ansprüche 1 bis 7, **dadurch gekennzeichnet, dass** die wärmehärtbare wässrige Zusammensetzung, umfassend mindestens ein Kohlenhydrat, ausgewählt aus hydrierten Zuckern, reduzierenden Zuckern, nicht reduzierenden Zuckern und Mischungen davon, ferner mindestens eine monomere Polycarbonsäure oder ein Salz oder Anhydrid einer solchen Säure umfasst.

9. Verfahren nach einem der vorstehenden Ansprüche,

**dadurch gekennzeichnet, dass** das Gewichtsverhältnis der wärmehärtenden wässrigen Zusammensetzung zu Latex, ausgedrückt in Trockenmasse, im Bereich von 2 : 1 bis 1 : 5, vorzugsweise von 1 : 1 bis 1 : 2, liegt.

10. Isolierprodukt auf Basis von Mineralfasern, die durch ein organisches Bindemittel gebunden sind, das durch das Verfahren nach einem der Ansprüche 1 bis 9 erhalten wird, wobei das Isolierprodukt aufweist:

- eine Dicke zwischen 10 und 300 mm, vorzugsweise zwischen 25 und 200 mm, gemessen nach der EN-Norm 823:2013, und
- eine Dichte zwischen 30 und 200 kg/m$^3$, vorzugsweise zwischen 50 und 150 kg/m$^3$.

11. Isolierprodukt auf Mineralfaserbasis nach Anspruch 10,
**dadurch gekennzeichnet, dass** es einen Young'schen Modul zwischen 0,01 und 5 MPa und einen Luftströmungswiderstand zwischen 10 und 200 kPa.s/m$^2$ aufweist.

12. Isolierprodukt auf Mineralfaserbasis nach einem der Ansprüche 10 bis 11, **dadurch gekennzeichnet, dass** die Mineralfasern Glasfasern oder Steinfasern oder Schlackenfasern oder Mischungen davon sind.

13. Verwendung eines Isolierprodukts auf Mineralfaserbasis nach einem der Ansprüche 10 bis 12 zum Verbessern der Schalldämmung im Bauwesen, im Transportwesen und in der chemischen oder petrochemischen Industrie.

**Claims**

1. A method for improving the acoustic performance of an insulating product based on mineral fibers bonded by an organic binder, comprising the application, to mineral fibers, of a first binder composition and of a second binder composition, the two binder compositions being applied separately from each other, simultaneously or in succession and in any order, **characterized in that:**

- the first binder composition is a latex and is applied in an amount of greater than 5% by weight, preferably of between 6% and 50%, more preferentially between 8% and 25%, expressed as dry matter relative to the weight of the mineral fibers, and
- the second binder composition is an aqueous thermosetting composition comprising at least one carbohydrate selected from hydrogenated sugars, reducing sugars, non-reducing sugars and mixtures thereof and/or an amine-containing phenolic resin substantially consisting of phenol-formaldehyde condensates and of phenol-formaldehyde-amine condensates, said composition being applied in an amount of between 2% and 12% by weight, preferably between 5% and 10%, expressed as dry matter relative to the weight of the mineral fibers.

2. The method according to claim 1, wherein the latex is based on polymer having a glass transition temperature (Tg) of between -50°C and 35°C, preferably of between -10°C and 35°C.

3. The method according to claim 2, wherein the latex contains a polymer, copolymer or homopolymer, of the vinyl type, acrylic type or styrene type.

4. The method according to claim 1, wherein the carbohydrate contains at least 50% by weight, preferably at least 70% by weight, and in particular at least 95% by weight of hydrogenated sugars.

5. The method according to any one of claims 1 to 4, wherein the carbohydrate is free of reducing sugars and/or non-reducing sugars.

6. The method according to any one of claims 1 to 5, wherein the carbohydrate is a hydrogenated sugar selected from the hydrogenation products of monosaccharides, disaccharides, oligosaccharides and mixtures thereof.

7. The method according to claim 6, **characterized in that** the hydrogenated sugar is selected from the group formed of maltitol, xylitol, sorbitol and the hydrogenation products of starch hydrolysates or lignocellulosic materials and mixtures thereof.

8. The method according to any of claims 1 to 7, **characterized in that** the aqueous thermosetting composition comprising at least one carbohydrate selected from hydrogenated sugars, reducing sugars, non-reducing sugars and mixtures thereof further comprises at least one monomeric polycarboxylic acid or a salt or anhydride of such an acid.

9.  The method according to any of the preceding claims, **characterized in that** the ratio by weight of the aqueous thermosetting composition to the latex, expressed as dry matter, is within the range from 2/1 to 1/5, and preferably from 1/1 to 1/2.

10. An insulating product based on mineral fibers bonded by an organic binder obtained by the method according to any one of claims 1 to 9, said insulating product having:

    - a thickness of between 10 and 300 mm, preferably between 25 and 200 mm, measured according to standard EN 823:2013, and
    - a density of between 30 and 200 $kg/m^3$, preferably between 50 and 150 $kg/m^3$.

11. The insulating product based on mineral fibers according to claim 10, **characterized in that** it has a Young's modulus of between 0.01 and 5 MPa and an air flow resistivity of between 10 and 200 $kPa.s/m^2$.

12. The insulating product based on mineral fibers according to either one of claims 10 to 11, **characterized in that** the mineral fibers are glass fibers or rock fibers or slag fibers, or mixtures thereof.

13. A use of an insulating product based on mineral fibers according to any one of claims 10 to 12, for improving acoustic insulation in the fields of construction, transportation and the chemical or petrochemical industry.

**EP 3 831 791 B1**

**Documents brevets cités dans la description**

- WO 2008043960 A
- WO 2008043961 A
- WO 20090809038 A
- WO 2010029266 A
- WO 2013014399 A

- WO 2013021112 A
- WO 2015159012 A
- WO 2015132518 A
- WO 2015181458 A
- WO 0196254 A

**Littérature non-brevet citée dans la description**

- **C. LANGLOIS ; R. PANNETON ; N. ATALLA.** Polynomial relations for quasi-static mechanical characterization of isotropic poroelastic materials. *J. Acoust. Soc. Am.,* 2001, vol. 110 (6), 3032-3040
- **C. LANGLOIS ; R.PANNETON ; N. ATALLA.** Polynomial relations for quasi-static mechanical characterization of isotropic poroelastic materials. *J. Acoust. Soc. Am.,* 2001, vol. 110 (6), 3032-3040

- **M.L MUNJAL.** Response Of A Multi-layered Infinite Plate To An Oblique Plane Wave By Means Of Transfer Matrices. *Journal of Sound and Vibration,* 08 Avril 1993, vol. 162 (2), 333-343